# EUROPEAN PATENT APPLICATION

(11) **EP 4 625 680 A1**
(43) Date of publication of application: **01.10.2025**
(21) Application number: 23894421.9
(22) Date of filing: 08.11.2023
(51) Int. Cl.: H01M 50/533, H01M 10/0587, H01M 50/107, H01M 50/35

(54) **CYLINDRICAL NON-AQUEOUS ELECTROLYTE SECONDARY BATTERY**

(30) Priority: 25.11.2022 JP 2022188277
(71) Applicant: Panasonic Energy Co., Ltd., Osaka 570-8511 (JP)
(72) Inventor: KIDA Tatsuya, Kadoma-shi, Osaka 571-0057 (JP); TANI Yuji, Kadoma-shi, Osaka 571-0057 (JP)
(74) Representative: Eisenführ Speiser
(86) International application number: PCT/JP2023/040139
(87) International publication number: WO 2024/111410

(57) **Abstract**

A cylindrical non-aqueous electrolyte secondary battery according to one embodiment comprises: an electrode body on which a positive electrode (11) and a negative electrode (12) are wound; and a bottomed, cylindrical outer can that accommodates the electrode body. The negative electrode (12) has a non-opposing part (12a) that is wound at least 1.25 rounds in a state in which the non-opposing part does not oppose the positive electrode (11). The non-opposing part (12a) includes: a negative electrode mixture layer formation part (12c) which is wound at least 0.5 rounds, which is continuous from a winding outer end to a winding inner end side, and in which a negative electrode mixture layer (41) is formed on at least one surface of a negative electrode core body (40); and a negative electrode core body exposed part (12d) which is continuous from the winding inner end to the winding outer end side, and in which the negative electrode mixture layer (41) is not formed on either surface of the negative electrode core body (40). A negative electrode lead (21) is connected to the negative electrode core body exposed part (12d). The average thickness of a protruding part (21a) which protrudes from the negative electrode core body exposed part (12d) to an outer can bottom part side is greater than the average thickness of a connection part (21b) which is connected to the negative electrode core body exposed part (12d).

## Description

### TECHNICAL FIELD

The present disclosure relates to a cylindrical nonaqueous electrolyte secondary battery.

### BACKGROUND ART

A cylindrical nonaqueous electrolyte secondary battery comprises an electrode assembly in which a positive electrode and a negative electrode are wound through a separator, and is formed by the electrode assembly being housed in an exterior can. Patent Literature 1 discloses a nonaqueous electrolyte secondary battery in which the negative electrode includes a non-facing portion that does not face the positive electrode on the winding inner end side of the electrode assembly, and the non-facing portion is wound 2 turns or more.

### CITATION LIST

### PATENT LITERATURE

PATENT LITERATURE 1: Japanese Unexamined Patent Application Publication No. 2013-137946

### SUMMARY

A hollow part of a winding core portion of a cylindrical nonaqueous electrolyte secondary battery can function as an exhaust path for exhausting the gas inside the battery to the outside. Therefore, the free volume of the winding core portion is preferably increased to ensure a sufficient exhaust path. However, when a negative electrode lead is provided in the winding core portion, the free volume of the winding core portion decreases. In this case, as a method to ensure a sufficient exhaust path, it is considered that the negative electrode lead provided in the winding core portion is made thinner to increase the free volume of the winding core portion. However, making the negative electrode lead thinner increases the resistance of the negative electrode lead and increases Joule heat generation. In a cylindrical non-aqueous electrolyte secondary battery, it is an important issue to smoothly exhaust gas inside the battery to the outside while suppressing Joule heat generation.

A non-aqueous electrolyte secondary battery according to the present disclosure comprises: an electrode assembly in which a positive electrode and a negative electrode are wound through a separator, the negative electrode including a negative electrode mixture layer formed on a negative electrode core; a non-aqueous electrolyte; and a bottomed cylindrical exterior can that houses the electrode assembly and the non-aqueous electrolyte. The negative electrode includes a non-facing portion wound 1.25 turns or more at the winding inner end side of the electrode assembly without facing the positive electrode through the separator. The non-facing portion includes: a negative electrode mixture layer forming portion in which the negative electrode mixture layer is formed on at least one surface of the negative electrode core continuously from a winding outer end toward a winding inner end of the non-facing portion, the negative electrode mixture layer forming portion being wound 0.5 turns or more; and a negative electrode core exposed portion in which the negative electrode mixture layer is not formed continuously from the winding inner end toward the winding outer end of the non-facing portion on both surfaces of the negative electrode core. A negative electrode lead is connected to the negative electrode core exposed portion. The negative electrode lead includes a protruding portion protruding from the negative electrode core exposed portion toward the bottom of the exterior can, and a connecting portion connected to the negative electrode core exposed portion. The average thickness of the protruding portion is larger than the average thickness of the connecting portion.

According to the cylindrical non-aqueous electrolyte secondary battery in the present disclosure, it is possible to smoothly exhaust the gas inside the battery to the outside while suppressing Joule heat generation.

### BRIEF DESCRIPTION OF DRAWING

FIG. 1 is an axial sectional view of a cylindrical nonaqueous electrolyte secondary battery as an example of an embodiment.
FIG. 2 is a plan view illustrating a winding structure on a winding inner end side of an electrode assembly as an example of an embodiment.
FIG. 3 is a view illustrating a portion on the winding inner end side of the electrode assembly as an example of an embodiment in an expanded state.
FIG. 4 is a sectional view taken along line AA in FIG. 3.
FIG. 5 is a view corresponding to FIG. 4 in another example of the embodiment.

### DESCRIPTION OF EMBODIMENTS

The present inventors have found that changing the thickness of the negative electrode lead in the axial direction of the battery makes it possible to smoothly exhaust the gas inside the battery to the outside while suppressing Joule heat generation. Specifically, the average thickness of the protruding portion of the negative electrode lead protruding from the electrode assembly toward the bottom of the exterior can is made larger than the average thickness of the connecting portion connected to the negative electrode. In this case, the resistance of the negative electrode lead on the bottom side of the exterior can where the current density is high can be reduced, and the free volume of the winding core portion of the electrode assembly can be increased.

Hereinafter, an example of an embodiment of the cylindrical nonaqueous electrolyte secondary battery according to the present disclosure will be described in detail with reference to the drawings. The following embodiment is only an example, and the present disclosure is not limited to the following embodiment. In addition, a form resulting from a selective combination of components of the following embodiment is included in the present disclosure.

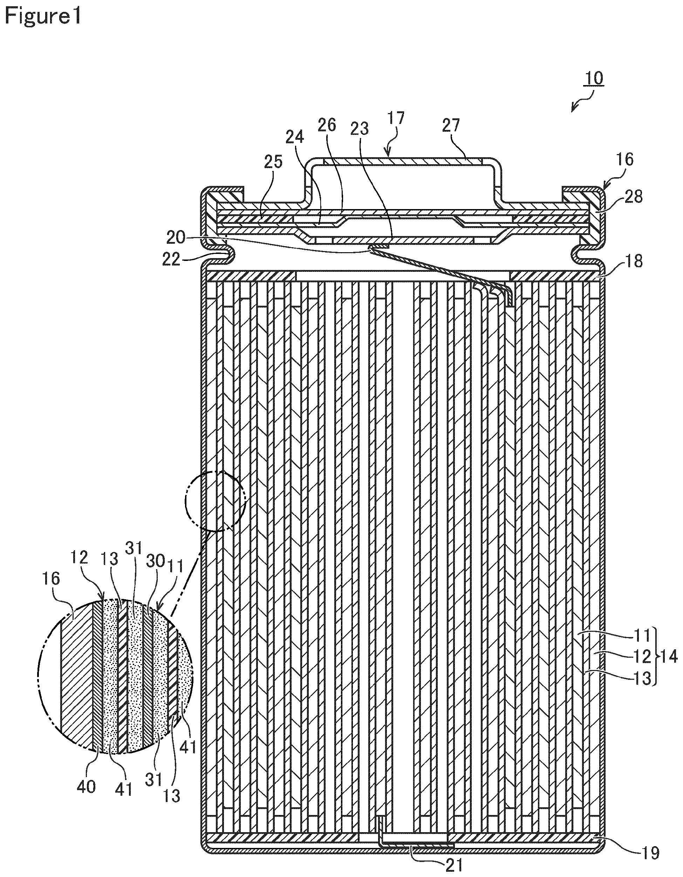

FIG. 1 is a view schematically illustrating a cross section of a cylindrical nonaqueous electrolyte secondary battery (hereinafter simply referred to as a battery) 10 as an example of the embodiment. As illustrated in FIG. 1, the battery 10 comprises an electrode assembly 14, a nonaqueous electrolyte (not illustrated), and an exterior can 16 that houses the electrode assembly 14 and the nonaqueous electrolyte. The electrode assembly 14 includes a positive electrode 11, a negative electrode 12, and a separator 13, and has a structure in which the positive electrode 11 and the negative electrode 12 are wound in a spiral shape through the separator 13. The exterior can 16 is a bottomed cylindrical metal container with an opening on one axial side, and the opening of the exterior can 16 is closed by a sealing assembly 17. In FIG. 1, to make the arrangement relationship of the positive electrode 11, the negative electrode 12, and the separator 13 in the electrode assembly 14 easier to understand, the number of winding turns is reduced compared to the actual case. In the following description, the side of the sealing assembly 17 in the axial direction (height direction) direction of battery 10 is referred to as "upper", and the bottom side of the exterior can 16 in the axial direction is referred to as "lower".

The nonaqueous electrolyte contains a nonaqueous solvent and an electrolyte salt dissolved in the nonaqueous solvent. For example, esters, ethers, nitriles, amides, and mixed solvents of two or more of these may be used as the nonaqueous solvent. The nonaqueous solvent may contain a halogen substitute obtained by substituting at least some of the hydrogen atoms of these solvents with halogen atoms such as fluorine. Note that the nonaqueous electrolyte is not limited to a liquid electrolyte and may be a solid electrolyte using a gel-like polymer or the like. A lithium salt such as LiPF₆ is used as the electrolyte salt.

The positive electrode 11, the negative electrode 12, and the separator 13 constituting the electrode assembly 14 are all belt-shaped long bodies, and are alternately laminated in the radial direction of the electrode assembly 14 by being wound in a spiral shape. The negative electrode 12 is formed one size larger than the positive electrode 11 to prevent precipitation of lithium. That is, the negative electrode 12 is formed longer than the positive electrode 11 in the longitudinal direction and the width direction (short-side direction). The separator 13 is formed at least one size larger than the positive electrode 11, and two separators 13 are arranged to sandwich the positive electrode 11. The battery 10 comprises insulating plates 18, 19 arranged above and below the electrode assembly 14, respectively.

The positive electrode 11 includes a positive electrode core 30 and a positive electrode mixture layer 31 formed on the positive electrode core 30. For the positive electrode core 30, a foil of a metal that is stable in the potential range of the positive electrode 11, such as aluminum or aluminum alloy, a film with the metal disposed on the surface layer, or the like can be used. The positive electrode mixture layer 31 contains a positive electrode active material, a conductive agent, and a binder. The positive electrode 11 can be prepared, for example, by: applying a positive electrode mixture slurry containing a positive electrode active material, a conductive agent, a binder, and the like onto the positive electrode core 30 to form a coating film; drying the coating film; and then compressing the coating film to form a positive electrode mixture layer 31 on both surfaces of the positive electrode core 30.

The positive electrode mixture layer 31 contains a particulate lithium metal composite oxide as the positive electrode active material. The lithium metal composite oxide is a composite oxide containing metal elements such as Co, Mn, Ni, and Al in addition to Li. The metal element constituting the lithium metal composite oxide is at least one selected from, for example, Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from Co, Ni, Al, and Mn is preferably contained. Examples of suitable composite oxides include a lithium metal composite oxide containing Ni, Co, and Mn, and a lithium metal composite oxide containing Ni, Co, and Al.

Examples of the conductive agent contained in the positive electrode mixture layer 31 include carbon black such as acetylene black and Ketchen black, carbon materials such as graphite, carbon nanotubes (CNT), carbon nanofibers, and graphene. Examples of the binder contained in the positive electrode mixture layer 31 include fluorine-containing resins such as polytetrafluoroethylene (PTFE), polyvinylidene fluoride (PVDF), polyacrylonitrile (PAN), polyimide, acrylic resin, and polyolefin. These resins may be used together with carboxymethyl cellulose (CMC) or its salt, polyethylene oxide (PEO), or the like.

The negative electrode 12 includes a negative electrode core 40 and a negative electrode mixture layer 41 formed on the negative electrode core 40. For the negative electrode core 40, a foil of a metal that is stable in the potential range of the negative electrode 12, such as copper or copper alloy, a film with the metal disposed on the surface layer, or the like can be used. The negative electrode mixture layer 41 contains a negative electrode active material, a binder, and, if necessary, a conductive agent. The negative electrode 12 can be prepared by: applying the negative electrode mixture slurry containing a negative electrode active material, a binder, and the like to the surface of the negative electrode core 40 to form a coating film; drying the coating film; and then compressing the coating film to form the negative electrode mixture layer 41 on both surfaces of the negative electrode core 40.

The negative electrode mixture layer 41 generally contains, as the negative electrode active material, a carbon material that reversibly stores and releases lithium ions. Suitable examples of the carbon material are graphite including natural graphite, such as scaly graphite, massive graphite, and earth graphite, and artificial graphite, such as massive artificial graphite (MAG) and graphitized mesophase carbon microbeads (MCMB). As the negative electrode active material, a material containing at least one of an element alloying with Li such as Si or Sn and a material containing the element may be used. Among them, a composite material containing Si is preferred.

Suitable examples of the composite material containing Si include a material in which fine Si particles are dispersed in a SiO₂ phase or a silicate phase such as lithium silicate, or a material in which fine Si particles are dispersed in an amorphous carbon phase. A conductive layer such as a carbon coating is formed on the particle surface of the composite material, for example. The combined use of a carbon material and a Si-containing composite material as the negative electrode active material is preferred from the viewpoint of achieving both high capacity and high durability of the battery.

As the binder contained in the negative electrode mixture layer 41, fluorine-containing resin, PAN, polyimide, acrylic resin, polyolefin, or the like may be used as in the case of the positive electrode mixture layer 31, but styrene butadiene rubber (SBR) is preferably used. The negative electrode mixture layer 41 preferably contains CMC or its salt, polyacrylic acid (PAA) or its salt, polyvinyl alcohol (PVA), or the like. Among them, SBR is preferably used together with CMC or its salt, PAA or its salt, or the like. The negative electrode mixture layer 41 may contain a conductive agent such as CNT.

A porous sheet having ionic permeability and insulation is used for the separator 13. Specific examples of the porous sheets include microporous thin films, woven fabrics, nonwoven fabrics, and the like. Polyolefins such as polyethylene and polypropylene, cellulose, and the like are suitable as materials for the separator 13. The separator 13 may have a single-layer structure or a multi-layer structure. A resin layer having high heat resistance such as aramid resin may be formed on the surface of the separator 13. A filler layer containing an inorganic filler may be formed on the interface between the separator 13 and at least one of the positive electrode 11 or the negative electrode 12.

A positive electrode lead 20 is connected to the positive electrode 11, and a negative electrode lead 21 is connected to the winding inner end side of the negative electrode 12. The positive electrode lead 20 extends toward the sealing assembly 17 through the through hole of the insulating plate 18, and the negative electrode lead 21 extends toward the bottom of the exterior can 16 through the through hole of the insulating plate 19. The positive electrode lead 20 is connected to the lower surface of an internal terminal plate 23 of the sealing assembly 17 by welding or the like. A cap 27 constituting the top plate of the sealing assembly 17 is electrically connected to the internal terminal plate 23, and the cap 27 serves as a positive electrode terminal. The negative electrode lead 21 is connected to the inner surface of the bottom of the metal exterior can 16 by welding or the like, and the exterior can 16 serves as a negative electrode terminal.

In the present embodiment, the negative electrode lead 21 is electrically connected to the winding inner end side of the negative electrode 12, and the negative electrode core 40 on the winding outer end side of the negative electrode 12 is brought into contact with the inner surface of the exterior can 16. In this manner, both the winding inner end side and the winding outer end side of the negative electrode 12 are electrically connected to the negative electrode terminal, thereby shortening the current path and reducing the electric resistance. Note that one negative electrode lead 21 may be electrically connected to the winding inner end side of the negative electrode 12 without bringing the negative electrode core 40 on the winding outer end side of the negative electrode 12 into contact with the inner surface of the exterior can 16.

As described above, the exterior can 16 is a bottomed cylindrical metal container with an opening on one axial side. A gasket 28 is provided between the exterior can 16 and the sealing assembly 17 to ensure the sealing inside the battery and the insulation between the exterior can 16 and the sealing assembly 17. The exterior can 16 is formed with a grooved portion 22, which has a part of the side surface portion protruding inward and supports the sealing assembly 17. The grooved portion 22 is preferably annularly formed along the circumferential direction of the exterior can 16 and supports the sealing assembly 17 on its upper surface. The sealing assembly 17 is fixed to the top of the exterior can 16 by a grooved portion 22 and an opening end portion of the exterior can 16 tightened to the sealing assembly 17.

The sealing assembly 17 has a structure in which the internal terminal plate 23, a lower vent member 24, an insulating member 25, an upper vent member 26, and a cap 27 are laminated in order from the electrode assembly 14 side. Each member constituting the sealing assembly 17 has a disk shape or a ring shape, for example, and each member except the insulating member 25 is electrically connected to each other. The lower vent member 24 and the upper vent member 26 are connected to each other at a central part, and the insulating member 25 is interposed between the peripheral part of each. When an anomaly occurs in the battery 10 and the internal pressure rises, the lower vent member 24 deforms and ruptures to push the upper vent member 26 toward the cap 27, thereby interrupting the current path between the lower vent member 24 and the upper vent member 26. When the internal pressure rises further, the upper vent member 26 ruptures, and gas is discharged from the opening portion of the cap 27.

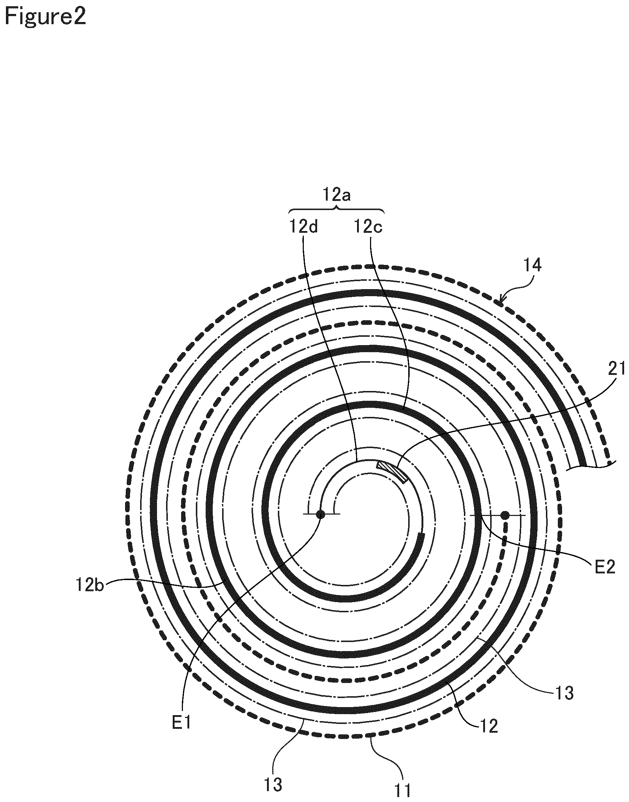

Hereinafter, the electrode assembly 14 will be described in detail with reference to FIGS. 2 to 5.

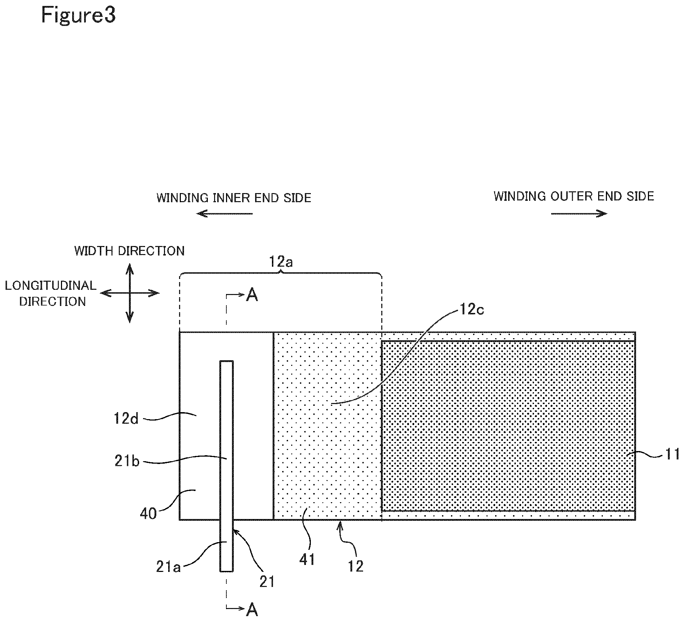

FIG. 2 is a plan view illustrating the winding structure on the winding inner end side of the electrode assembly 14. FIG. 3 is a view illustrating the facing relationship between the positive electrode 11 and the negative electrode 12 by developing the portion of the electrode assembly 14 on the winding inner end side. In FIG. 2, the negative electrode 12 is indicated by a solid line, the positive electrode 11 is indicated by a dashed line, and the separator 13 is indicated by a dash-dotted line to make the arrangement relationship easier to understand. In FIG. 2, the gap between the positive electrode 11, the negative electrode 12, and the separator 13 is exaggerated.

As illustrated in FIGS. 2 and 3, only the negative electrode 12 out of the positive electrode 11 and the negative electrode 12 is disposed on the winding inner end side of the electrode assembly 14. Specifically, the negative electrode 12 includes a non-facing portion 12a wound 1.25 turns or more at the winding inner end side of the electrode assembly 14 without facing the positive electrode 11 through the separator 13. A winding inner end E1 of the non-facing portion 12a coincides with the winding inner end of the negative electrode 12. The non-facing portion 12a is preferably wound 2 turns or less and more preferably 1.5 turns or less. In the present embodiment, as illustrated in FIG. 2, the negative electrode 12 includes the non-facing portion 12a wound 1.5 turns from the winding inner end E1, and a facing portion 12b wound continuously from a winding outer end E2 of the non-facing portion 12a and facing the positive electrode 11 through the separator 13.

The non-facing portion 12a includes a negative electrode mixture layer forming portion 12c and a negative electrode core exposed portion 12d. The negative electrode mixture layer forming portion 12c is a portion where the negative electrode mixture layer 41 is formed on at least one surface of the negative electrode core 40 continuously from the winding outer end E2 toward the winding inner end E1 of the non-facing portion 12a. The negative electrode core exposed portion 12d is a portion where the negative electrode mixture layer 41 is not formed on both surfaces of the negative electrode core 40 continuously from the winding inner end E1 to the winding outer end E2 side. The negative electrode lead 21 is connected to the winding inner surface of the negative electrode core exposed portion 12d. In FIG. 2, the thick solid line indicates the negative electrode mixture layer forming portion 12c, and the thin solid line indicates the negative electrode core exposed portion 12d.

The negative electrode mixture layer forming portion 12c is wound 0.5 turns or more, preferably 0.75 turns or more. Since the positive electrode 11 does not face either surface of the negative electrode mixture layer forming portion 12c, no charge-discharge reaction occurs in the negative electrode mixture layer forming portion 12c. As a result, the negative electrode mixture layer forming portion 12c hardly deforms due to charging and discharging. The negative electrode mixture layer forming portion 12c has higher strength than the negative electrode core exposed portion 12d, where only the negative electrode core is exposed on both surfaces. Therefore, the winding core portion including the negative electrode mixture layer forming portion 12c serves as an exhaust passage, and the gas generated during anomaly heat generation or the like of the battery can be guided toward the sealing assembly 17 having the upper vent member 26 as an explosion-proof valve and can be efficiently exhausted. The explosion-proof valve may be provided at the bottom of the exterior can 16.

As illustrated in FIG. 3, the negative electrode lead 21 is connected to the negative electrode core exposed portion 12d. The negative electrode lead 21 includes a protruding portion 21a protruding downward from the negative electrode core exposed portion 12d and a connecting portion 21b connected to the negative electrode core exposed portion 12d. The length of the protruding portion 21a is not particularly limited, but is, for example, greater than or equal to 5 mm and less than or equal to 15 mm. From the viewpoint of enhancing the joint strength between the negative electrode 12 and the negative electrode lead 21, the length of the connecting portion 21b is preferably greater than or equal to 50% of the width of the negative electrode 12, and more preferably greater than or equal to 70%. The connecting portion 21b can be specified as a portion of the negative electrode lead 21 that can be connected to the negative electrode core exposed portion 12d, that is, a portion of the negative electrode lead 21 that faces the negative electrode core exposed portion 12d.

Here, the average thickness of the protruding portion 21a is larger than the average thickness of the connecting portion 21b. By making the average thickness of the protruding portion 21a larger than the average thickness of the connecting portion 21b, the resistance of the negative electrode lead 21 at the lower side where the current density is high can be reduced, and Joule heat generation can be suppressed. By making the average thickness of the connecting portion 21b smaller than the average thickness of the protruding portion 21a, the free volume of the winding core portion of the electrode assembly 14 can be increased, and the gas generated inside the battery can be smoothly exhausted to the outside.

From the viewpoint of reducing the resistance of the negative electrode lead 21, the average thickness of the protruding portion 21a is preferably greater than or equal to 120% of the average thickness of the connecting portion 21b, and more preferably greater than or equal to 150% or more. The average thickness of the protruding portion 21a is, for example, greater than or equal to 50 µm and less than or equal to 250 µm. Note that the average thickness of each of the protruding portion 21a and the connecting portion 21b is an average value when the thickness is measured at 1 mm intervals using a laser displacement meter from the end portion of each portion in the vertical direction of the battery.

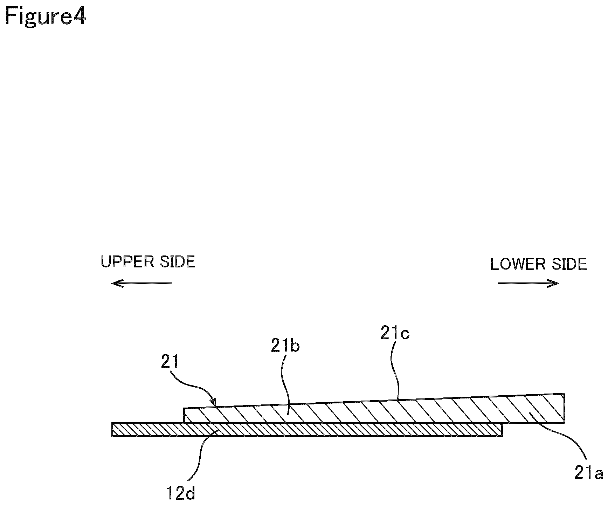

FIG. 4 is a sectional view taken along line AA in FIG. 3 and schematically illustrates the thickness of the negative electrode lead 21. As illustrated in FIG. 4, the connecting portion 21b is provided with an inclined region 21c having a thickness that continuously increases toward the lower side of the battery 10. The inclination angle of the inclined region 21c with respect to the extending direction of the negative electrode lead 21 (hereinafter simply referred to as the inclination angle) is not particularly limited and is, for example, greater than or equal to 0.05° and less than or equal to 0.5°. By providing the inclined region 21c in the connecting portion 21b, the gas generated inside the battery is exhausted to the outside along the inclined region 21c. In addition, by providing the inclined region 21c, the stress concentration at the place where the thickness of the negative electrode lead 21 changes is mitigated, and the rupture of the negative electrode lead 21 is suppressed. In the present embodiment, as illustrated in FIG. 4, the inclined region 21c is provided over the protruding portion 21a and the connecting portion 21b. In other words, the upper end of the connecting portion 21b is the start point of the inclined region 21c, and the lower end of the protruding portion 21a is the end point of the inclined region 21c.

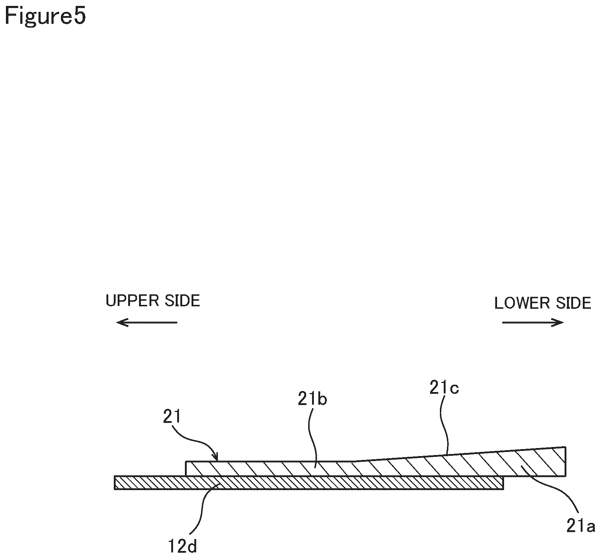

In the present embodiment, the inclined region 21c is provided over the protruding portion 21a and the connecting portion 21b, but is not limited thereto. For example, the inclined region 21c may be provided only on the connecting portion 21b. Alternatively, the inclined region 21c may be provided over the entire connecting portion 21b, or as illustrated in FIG. 5, the inclined region 21c may be provided only in a part of the connecting portion 21b.

In the present embodiment, the inclination angle of the inclined region 21c is a constant angle, but is not limited thereto. For example, the inclined region 21c having a plurality of inclination angles may be provided. When the inclined region 21c having a plurality of inclination angles is provided, the inclination angle of the inclined region 21c located on the upper side of the battery is preferably made smaller than the inclination angle of the inclined region 21c located on the lower side of the battery. Thus, the gas generated inside the battery is efficiently exhausted to the outside along the inclined region 21c.

In the present embodiment, by providing the inclined region 21c, the average thickness of the protruding portion 21a is made larger than the average thickness of the connecting portion 21b, but the present embodiment is not limited thereto. For example, the average thickness of the protruding portion 21a may be larger than the average thickness of the connecting portion 21b by providing a step at the connecting portion 21b.

### EXAMPLES

Hereinafter, the present disclosure will be further described through examples, but the present disclosure is not limited to these examples.

### <Example 1>

### [Preparation of Positive Electrode]

Aluminum-containing lithium nickel-cobaltate (LiNi_{0.88}Co_{0.09}A_{l0.03}O₂) was used as a positive electrode active material. A positive electrode mixture slurry was prepared by mixing 100 parts by mass of LiNi_{0.88}Co_{0.09}Al_{0.03}O₂ positive electrode active material as a positive electrode active material, 1.0 parts by mass of acetylene black as a conductive agent, and 0.9 parts by mass of polyvinylidene fluoride (PVDF) as a binder in a dispersion medium of N-methylpyrrolidone (NMP). The prepared positive electrode mixture slurry was uniformly applied to both surfaces of the positive electrode core of aluminum foil with a thickness of 15 µm. Next, NMP was removed in a dryer at 100 °C to 150°C, and then compression was performed with a roll press to prepare a positive electrode plate. The positive electrode plate was cut to 0.144 mm thick, 62.6 mm wide, and 860 mm long to prepare a positive electrode.

### [Preparation of Negative Electrode]

Graphite powder and Si oxide were mixed to have proportions of 95 parts by mass and 5 parts by mass, respectively, to prepare a negative electrode active material. A negative electrode mixture slurry was prepared by mixing 100 parts by mass of a negative electrode active material, 1 part by mass of CMC as a thickener, and 1 part by mass of styrene-butadiene rubber as a binder in water. The negative electrode mixture slurry was applied to both surfaces of an 8 µm thick copper foil negative electrode core to form a negative electrode mixture layer. Then, the negative electrode mixture layer was dried and then compressed with a compression roller so that the negative electrode thickness was 0.160 mm, thereby preparing a negative electrode. The negative electrode plate was cut to 64.2 mm wide and 959 mm long to prepare a negative electrode.

### [Attachment of Negative Electrode Lead]

As illustrated in FIG. 4, a nickel negative electrode lead with thicknesses of 100 µm and 200 µm at the upper and lower ends, respectively, and with thicknesses continuously increasing from the upper end to the lower end, was attached to the negative electrode core exposed portion on the winding inner end side of the negative electrode. The length of the protruding portion is 10 mm, and the length of the connecting portion is 60 mm. The average thickness of the protruding portion in Example 1 was 193 µm, and the average thickness of the connecting portion was 143 µm.

### [Preparation of Electrode Assembly]

The positive electrode and the negative electrode were wound via a polyethylene separator, and a polypropylene (PP) tape having a width of 12 mm, a thickness of 30 µm, and a length of 50.0 mm was attached to the outermost periphery within 10 mm of both end portions of the electrode assembly. At this time, the electrode assembly was prepared such that the winding structure on the winding inner end side corresponded to the structure illustrated in FIG. 2, and the negative electrode core exposed portion was placed on the outermost periphery of the electrode assembly.

### [Preparation of Nonaqueous Electrolyte]

A nonaqueous electrolyte was prepared by adding 5 parts by mass of vinylene carbonate (VC) to 100 parts by mass of a mixed solvent (EC: DMC = 1:3 by volume) containing ethylene carbonate (EC) and dimethyl carbonate (DMC), and dissolving 1.5 mol/L of LiPF₆.

### [Preparation of Nonaqueous Electrolyte Secondary Battery]

Insulating plates were placed at the top and bottom of the electrode assembly, and the negative electrode lead was welded to an exterior can, and the positive electrode lead was welded to the sealing assembly with an internal pressure operated explosion-proof valve, and stored inside the exterior can. Thereafter, the nonaqueous electrolyte was injected into the exterior can using the depressurization method. Finally, a cylindrical nonaqueous electrolyte secondary battery was produced by crimping the opening end portion of the exterior can with the sealing plate via a gasket. The capacity of the battery was 4600 mAh.

### <Example 2>

As illustrated in FIG. 5, a nickel negative electrode lead with thicknesses of 100 µm and 200 µm at the upper and lower ends, respectively, and with thicknesses continuously increasing from the central part to the lower end of the negative electrode lead, was attached to the negative electrode core exposed portion on the winding inner end side of the negative electrode. The average thickness of the protruding portion in Example 2 was 186 µm, and the average thickness of the connecting portion was 115 µm. The rest of the configuration is the same as in Example 1.

### <Example 3>

As illustrated in FIG. 5, a nickel negative electrode lead with thicknesses of 100 µm and 250 µm at the upper and lower ends, respectively, and with thicknesses continuously increasing from the central part to the lower end, was attached to the negative electrode core exposed portion on the winding inner end side of the negative electrode. The average thickness of the protruding portion in Example 3 was 229 µm, and the average thickness of the connecting portion was 122 µm. The rest of the configuration is the same as in Example 1.

### <Comparative Example 1>

A nickel negative electrode lead having a uniform thickness of 200 µm was attached to the negative electrode core exposed portion on the winding inner end side of the negative electrode. The rest of the configuration is the same as in Example 1.

### <Comparative Example 2>

A nickel negative electrode lead having a uniform thickness of 150 µm was attached to the negative electrode core exposed portion on the winding inner end side of the negative electrode. The rest of the configuration is the same as in Example 1.

Table 1 shows the free volume of the winding core portion and the electric resistance per unit length of the protruding portion for each of the batteries in Example 1 and Comparative Example. Note that the free volume of the winding core portion and the electric resistance per unit length of the protruding portion for each of the batteries in Table 1 are relative values when the battery in Comparative Example 1 is 100. The smaller the value of the electric resistance per unit length of the protruding portions, the lower the resistance.

**[Table 1]**

| | Average thickness (µm) | | Free volume of winding core portion (relative value) | Electric resistance per unit length of protruding portion (relative value) |
|---|---|---|---|---|
| | Protruding portion | Connecting portion | | |
| Example 1 | 193 | 143 | 101.3 | 104 |
| Example2 | 186 | 115 | 101.9 | 108 |
| Example3 | 229 | 122 | 101.7 | 88 |
| Comparative Example1 | 200 | 200 | 100 | 100 |
| Comparative Example2 | 150 | 150 | 101.1 | 133 |

As shown in Table 1, in each of the batteries in Examples 1 and 2, the electric resistance is equivalent to that of the battery in Comparative Example 1, and the free volume of the winding core portion is greater than that of the battery in Comparative Example 1. In the battery in Example 3, the electric resistance is smaller than that of the battery in Comparative Example 1, and the free volume of the winding core portion is larger than that of the battery in Comparative Example 1. On the other hand, in the battery in Comparative Example 2, the free volume of the winding core portion is larger than that of the battery in Comparative Example 1, but the electric resistance is significantly greater than that of the battery in Comparative Example 1.

From the above test results, it can be seen that making the average thickness of the protruding portion larger than that of the connecting portion makes it possible to increase the free volume of the winding core portion and smoothly exhaust the gas inside the battery to the outside while suppressing the increase in the resistance of the negative electrode lead in the protruding portion.

### REFERENCE SIGNS LIST

10 Battery (Nonaqueous electrolyte secondary battery), 11 Positive electrode, 12 Negative electrode, 12a Non-facing portion, 12b Opposing portion, 12c Negative electrode mixture layer forming portion, 12d Negative electrode core exposed portion, 13 Separator, 14 Electrode assembly, 16 Exterior can, 17 Sealing assembly, 18,19 Insulating plate, 20 Positive electrode lead, 21 Negative electrode lead, 21a Protruding portion, 21b Connecting portion, 21c Inclined region, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A cylindrical non-aqueous electrolyte secondary battery comprising:
an electrode assembly in which a positive electrode and a negative electrode are wound through a separator, the negative electrode including a negative electrode mixture layer formed on a negative electrode core;
a non-aqueous electrolyte; and
a bottomed cylindrical exterior can that houses the electrode assembly and the non-aqueous electrolyte, wherein
the negative electrode includes a non-facing portion wound 1.25 turns or more at a winding inner end side of the electrode assembly without facing the positive electrode through the separator,
the non-facing portion includes
a negative electrode mixture layer forming portion in which the negative electrode mixture layer is formed on at least one surface of the negative electrode core continuously from a winding outer end toward a winding inner end of the non-facing portion, the negative electrode mixture layer forming portion being wound 0.5 turns or more, and
a negative electrode core exposed portion in which the negative electrode mixture layer is not formed continuously from the winding inner end toward the winding outer end of the non-facing portion on both surfaces of the negative electrode core,
a negative electrode lead is connected to the negative electrode core exposed portion,
the negative electrode lead includes a protruding portion protruding from the negative electrode core exposed portion toward a bottom of the exterior can, and a connecting portion connected to the negative electrode core exposed portion, and
an average thickness of the protruding portion is larger than an average thickness of the connecting portion.

2. The cylindrical non-aqueous electrolyte secondary battery according to claim 1, wherein the average thickness of the protruding portion is greater than or equal to 120% of the average thickness of the connecting portion.

3. The cylindrical non-aqueous electrolyte secondary battery according to claim 1 or 2, wherein the connecting portion is provided with an inclined region having a thickness that continuously increases toward the bottom of the exterior can.
